# EUROPEAN PATENT APPLICATION

(11) **EP 1 982 852 A1**
(43) Date of publication of application: **22.10.2008**
(21) Application number: 08103577.6
(22) Date of filing: 16.04.2008
(51) Int. Cl.: B60C 29/00, F16D 66/00

(54) **Wrong Wheel Warning Sensor**

(30) Priority: 17.04.2007 US 736054
(71) Applicant: Bendix Spicer Foundation Brake LLC, Elyria, OH 44035 (US)
(72) Inventor: Siebke, Alf, 86938, Schondorf am Ammersee (DE)
(74) Representative: Dantz, Jan Henning

(57) **Abstract**

A warning system is adapted to indicate disc brake and wheel component incompatibility. The system includes an element having a section that is disposed so as to extend between a non-rotating disc brake component and a rotating contour of the wheel component (66,67,68) at a location of minimum clearance between the non-rotating disc brake component and the wheel component. Optionally, the warning system defines part of a brake pad wear indication device (60).

## Description

### BACKGROUND OF THE INVENTION

### 1. Field of the Invention

This invention relates to a sensor placed on the caliper of an air disc brake assembly typically used in conjunction with a commercial vehicle. The sensor provides a warning signal when an incompatible wheel is erroneously mounted on an axle of the vehicle in order to minimize damage potentially caused by contact between rotating and non-rotating components located in a wheel end area.

Safe operation of a wheel on a commercial vehicle requires avoiding contact between the rotating inner contour of the wheel and adjacent fixed axle or suspension components. Such contact can lead to damage and safety critical failure of parts. Accordingly, a minimum safety clearance between rotating and non-rotating components located in the wheel end area is required.

A tire inflation valve and its stem constitute parts of the relevant rotating inner contour of the wheel whenever the tire inflation valve is positioned on the axle oriented, inboard side of a wheel rim. Concern about maintaining this clearance is of particular relevance for traffic safety, because eventual contact of the rotating valve stem with a fixed vehicle component could lead to valve failure and subsequent tire pressure loss. One critical failure mode, in this case, would be a rapid loss of tire pressure in a front wheel, which could lead to sudden vehicle instability and attendant loss of control by a driver. A slow tire pressure loss, moreover, could remain undetected for a long time, and may lead to safety relevant issues, should the ability of the vehicle to hold the road deteriorate or if the tire becomes damaged. This is of particular concern in connection with inner tires of rear axle twin wheel sets, as these inner tires are less visible and could rub against outer tires, causing extensive heat and eventually initiating tire burning.

Wheel end components closest to inner wheel contours are generally brake parts. This is due to the technical necessity to fully exploit the available space inside wheel rims in order to inscribe maximum rotor diameters and caliper wall sections needed to achieve the required high brake torques while generating the lowest possible temperatures. Interference potentials in drum brakes and disc brakes have a significant, concept related difference. In a drum brake configuration, the drum rotates together with the wheel rim around fixed brake shoes. In a disc brake configuration, however, the caliper and the carrier are fixed, and the wheel rim rotates around the caliper and carrier parts. As a result, with a drum brake configuration, the rim and its closest adjacent part, the drum, rotate synchronously. A disc brake configuration, by contrast, results in relative movement between the wheel rim and the caliper/carrier. Thus, in a drum brake configuration, contact between an inflation valve stem and a drum will not necessarily lead to tire deflation, tire failure, or some other functional issue. However, in a disc brake configuration, because of the concept-related higher risk potential mentioned, depending on the degree of eventual interference between the inflation valve stem and the caliper, the risk of valve or tire failure is significantly higher.

A vehicle manufacturer has the ability to control release and monitor assembly of selected wheel and valve combinations in connection with original equipment, thus ensuring proper inflation valve stem and caliper clearance. An improper combination can thus be readily excluded in original equipment. When a vehicle conversion or tire change in the field occurs, however, the vehicle manufacture has no control over compatibility of the wheel/valve combination used. This is of particular significance in the North American market, because rims with inboard valve stems are standard. Unlike the European approach, in which rims having outboard valves were introduced together with air disc brakes, North American vehicle manufacturers prefer to continue using existing inboard valve rim configurations together with air disc brakes. Significant variation in spare wheels for drum brake use are also on the market, and many of the spare wheels available are not compatible with air disc brake configurations as described. Wheel compatibility can be a critical success factor when introducing new air disc brake technology in North America or another drum brake dominated market. Finally, due to United States product liability regulations, original equipment manufacturers are very sensitive to any kind of incompatibility risk, which imposes additional barriers to adapting air disc brake technology to new vehicles.

### 2. Description of Related Art

European document EP 0 701 911 B1 to Weber et al. concerns wheel configurations in which issues relating to contact of the nature mentioned are avoided. However, introduction of new wheel or rim configurations, such as those forming the subject matter of this document, in North America, Asia, or other significant markets would require decades of lead time to phase out wheel configuration designs which are incompatible with air disc brakes. Significant additional costs would also result due to the requirements for additional part numbers and stocking related to production and service.

Another solution developed for test vehicles is to select compatible rim designs, and then give the rims a unique hub attachment pattern. The unique hub attachment pattern could be provided by differences in hub/rim pilot diameters or a pin or pins protruding from hubs through additional holes in the rim faces. This approach, however, necessitates the use of specific rims and wheels that are mechanically coded and not replaceable by standard wheels. These items are special parts, which are expensive, and original equipment manufacturers have been unwilling to support this sort of solution.

Yet another simple approach is to offer air disc brakes only in combination with larger wheels, for example 24.5" wheels (for a 22.5" brake). This approach, while adequately addressing original equipment configuration issues, fails to properly resolve potential aftermarket issues such as those discussed above.

U.S. Patent 4,677,420 to Topić et al. discloses a wear indicator wire that is routed across a retaining bar on a disc brake caliper. A contact spring holds the sensing element against the pad, and a spring clip holds the wire against the retaining bar so it doesn't impact the wheel rim. The Topić et al. indicator ultimately measures lining wear, and the wire is not to be severed at the location of the retaining bar.

U.S. Patent 4,749,063 to Garrett et al. relates to a system that monitors a clearance between a braking surface and braking member. Air is passed over the brake assembly, and an air flow sensor monitors the air flow in the clearance area. If the air flow is not within predetermined limits, a brake adjuster is moved to correct the situation.

U.S. Patent 5,454,450 to Tanigawa concerns a lining wear probe in which a wire held by the probe is severed when the brake pad is worn. The probe keeps the wire in place after it is severed. The Tanigawa probe concerns lining wear problems only.

U.S. Patent 6,345,700 to Zenzen discloses a lining wear sensor with a protective shield or cover, which protects the wire of the sensor from mechanical stress and heat.

Finally, U.S. Patent application publication 2006/0011424 to Goodell et al. relates to a wheel valve stem shield for air disc brake applications, and addresses the problem of preventing valve stem damage due to fitting of incompatible wheel ends. The shield can be a single stamped device configured for the particular wheel end with necessary notches and recesses.

### SUMMARY OF THE INVENTION

The invention provides the warning system of claim 1. Further, the invention provides the vehicle wheel end assemblies of claims 11 and 16. Preferred embodiments of the warning system of claim 1 or the warning system mentioned in claims 11 and 16 are the subject matter of the subclaims. It is contemplated, according to one aspect of this present invention, to provide a unique wire or cable routing configuration in which a portion of the cable is located and oriented so as to impact an air valve stem to provide an indication of erroneous wheel mounting to a vehicle operator. The cable, which is either integrated into an existing pad wear warning system or mounted appropriately as a separate device, is routed such that, in one configuration of the invention, it travels along the catch or retainer by which a brake pad retainer bar is secured to the caliper. Contact between the caliper or other element, which only occurs if an incorrectly sized wheel rim assembly is placed on the axle, serves to open or close an electric circuit as the cable portion is worn through due to contact between the valve stem and caliper.

This functional concept, especially when the sensor is integrated into pad wear warning wiring, is essentially a functional expansion of an existing pad wear detection device. The present invention thus can incorporate wiring and signal processing already existing in the vehicle, since the same dashboard warning light could be used to indicate either pad wear or improper wheel rim mounting. Essential advantages, therefore, include the proven reliability of the current system and the limited additional cost. High system reliability is additionally provided by the use of only a few simple components and due to existing positive pad wear warning system history.

Costs of the system proposed additional to those of an existing pad wear warning device are limited, since all that is required is an extension of existing wiring and, in essence, additional components are not needed.

In a general sense, the invention concerns involves a warning system adapted to indicate disc brake and wheel component incompatibility. The warning system has a section of a cable forming an element thereof disposed so that it extends between a non-rotating disc brake component and a rotating contour of the wheel component, such as the contour defined by a tire inflation valve. The cable section is positioned at a location of minimum clearance between the non-rotating disc brake component and the wheel component, and preferably extends along an outboard portion of a caliper of the disc brake. The non-rotating disc brake component, in one preferred configuration, is a disc brake caliper, and the cable section can define part of a brake pad wear indication device, if desired. If so, the cable section can lead to an outboard brake pad wear sensor.

### BRIEF DESCRIPTION OF THE DRAWINGS

Figure 1 is an exploded perspective view showing cooperation of certain elements of a disc brake assembly into which a sensor according to the invention is incorporated;

Figure 2 is a side view, partly in section, showing a sensor having one wire routing configuration;

Figure 3 is a view similar to that of Figure 2 but showing a sensor having an alternative wire routing configuration;

Figure 4 is an end view of a catch for a brake pad retainer bar illustrating another wire routing configuration; and

Figure 5 is a view similar to that of Figure 4 but of a further wire routing configuration.

### DETAILED DESCRIPTION OF THE DRAWINGS

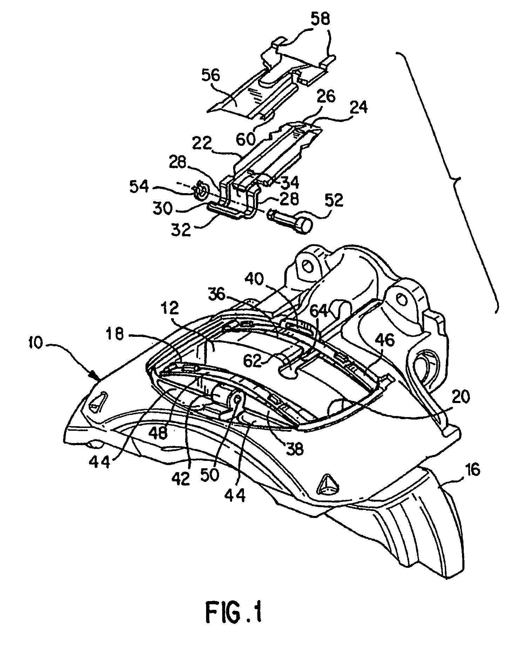

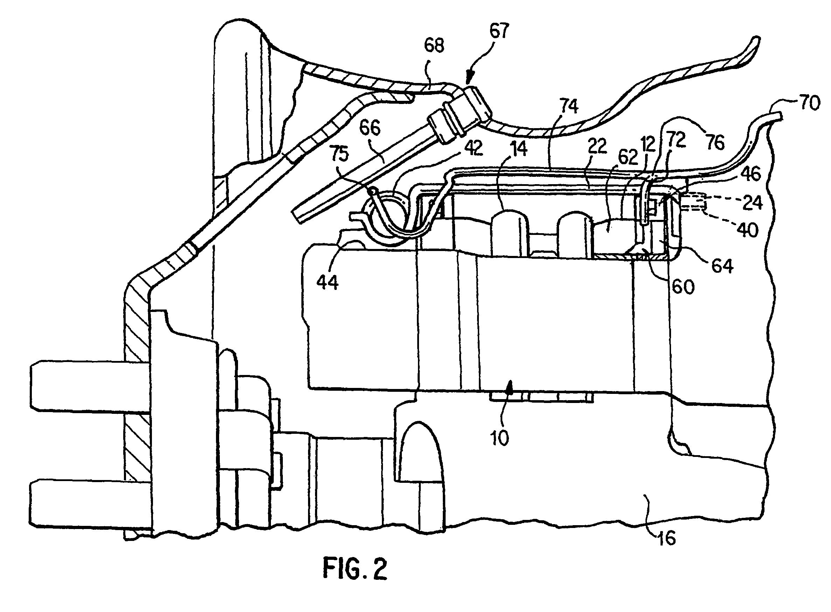

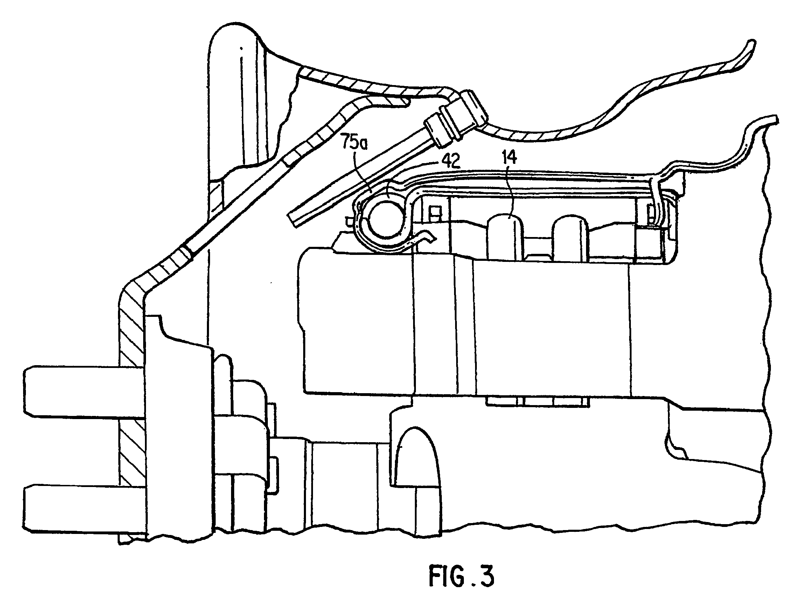

A caliper 10 is shown in Figure 1, in perspective, from one side and above. Discussions of disc brake configurations including calipers similar to the caliper 10 are provided, for example, in commonly assigned, co-pending U.S. Patent application serial no. 11/599,490, filed November 15, 2006, and Bendix Spicer Foundation Brake LLC Service Data publication SD-23-7541, the disclosures of which are incorporated herein by reference as non-essential material. In such configurations, when vehicle brakes are applied, air enters a service brake chamber and operates in a known manner, through a known arrangement, to move an inboard brake pad 12 into contact with a rotor 14, shown in Figures 2 and 3. Movement of the inboard brake pad forces the caliper 10, sliding on guide pins secured to a carrier 16, away from the rotor. This caliper movement, in turn, pulls an outboard brake pad 18 towards the rotor. The clamping action of the brake pads 12, 18 on the rotor 14 applies braking force to a vehicle wheel in a conventional fashion. An opening 20 is provided in the caliper 10 to permit inspection and certain maintenance procedures, such as pad replacement.

A retainer bar 22 is typically used to retain the brake pads on the caliper 10. As illustrated, the retainer bar 22 includes a flange 24, defining an inboard retainer bar end 26, and U-shaped fingers 28 joined together by a connecting portion 30 defining an outboard retainer bar end 32. Together with the rest of the retainer bar 22, the connecting portion 30 and the fingers 28 define an aperture 34 adjacent the outboard retainer bar end 32.

To retain the backing plate 36 of the inboard brake pad 12 and the backing plate 38 of the outboard brake pad 18 on the caliper 10, the inboard end 26 of the retainer bar 22 is inserted into a groove or recess 40 formed in the caliper. The outboard retainer bar end 32 is then pivoted about the inboard retainer bar end 26 downwardly until an upstanding catch or retainer 42, integrally formed with or otherwise located on an outboard section 44 of the caliper 10, passes through the aperture 34. The retainer bar 22 is pivoted and pressed against pad holder springs 46 and 48 so that U- or V-shaped recesses formed by the fingers 28 align with a hole 50 passing through the catch or retainer 42. The catch or retainer could be alternatively configured in other ways, such as in the form of a hook. After alignment of the finger recesses and the hole 50, a retainer pin 52 is inserted into the recesses and through the hole 50 to secure the retainer bar 22 in position on the caliper. Appropriate hardware, such as a snap ring 54, is used to lock the pin 52 in place.

A cable protection cover 56, properly positioned with respect to the caliper 10 by extensions 58, can be snapped into place over cables, which are at least partly shown in Figures 2-5 but not in Figure 1, leading from electric wear indicator sensors mounted in the brake pads 12 and 18 to an appropriate vehicle alarm, electronic monitoring system, diagnostic tool adapter, or diagnostic tool *per se.* The cover 56 may be frictionally secured to or snapped and locked in position over the retainer bar 22 by lateral flanges 60.

It will be understood that removal of the cover 56 and the retainer bar 22 from the caliper 10 can be effected by reversing the procedure discussed above.

An electronic monitoring system typically includes sensors installed in the brake pads 12 and 18 to allow the status of pad wear to be monitored. U.S. Patents 4,869,350 to Fargier et al. and 5,168,260 to Mery provide examples of such sensors, as do the Topić et al. and Tanigawa patents mentioned previously. Figure 2 schematically illustrates one such sensor 60 installed in pre-formed slots 62 and 64 respectively defined in the inboard brake pad 12 and the backing plate 36. Other sensor installation configurations are common, and the present invention is not to be considered limited in applicability to the particular sensor installation configuration represented in Figure 2. Instead, the invention can be used either on its own, without cooperation with any brake pad wear indication system, or in conjunction with any appropriate sensor configuration in which a point is reached when the sensor comes into contact with a brake rotor as the brake pad wears away through use.

As noted in the Bendix Spicer Foundation Brake LLC Service Data publication, with in-pad, normally-closed indicators, when the sensor itself is worn through, a circuit is broken, current flowing through the sensor is interrupted, and the vehicle operator is alerted by actuation or de-actuation of an appropriate device. For in-pad, normally-open indicators, by contrast, when the sensor is worn through, a circuit is completed by the rotor touching sensor contacts, and the vehicle operator is alerted by actuation or de-actuation of an appropriate device. The present invention is most readily usable with normally-closed indicators for reasons which will become clear, although it is certainly possible to adapt the invention for use with either indicator type.

On some vehicles, moreover, an electronic system is fully integrated into the vehicle monitoring system and uses a buzzer or lamp to alert the driver. Alternate vehicle arrangements either permit a hand-held diagnostic tool to be used at individual wheel connections or attach to an appropriate socket in the vehicle dash, allowing multiple brakes to be checked from that location. This invention is compatible with any of these systems.

Again, to ensure safe usage of wheels, primarily on commercial vehicles but also on recreational and other vehicles, contact between the rotating inner contour of a wheel and adjacent fixed axle or suspension components cannot occur. Such contact can lead to damage and result in safety-critical failure of parts. Accordingly, a minimum safety clearance between rotating and non-rotating components located in the wheel end area is required. Referring again to Figure 2, one part of the relevant rotating inner contour of the wheel is defined by the valve stem 66 of a tire inflation valve 67 when that valve stem is positioned as shown on an axle-oriented, inboard side of a wheel rim 68. This is of particular relevance for safety of the vehicle in traffic, because eventual contact of the rotating valve stem 66 with a component such as the caliper 10, which is fixed to the vehicle, could lead to valve failure and subsequent tire pressure loss. The critical failure mode, in this case, would be a rapid loss of front wheel tire pressure, which could lead to sudden vehicle instability that may not be controllable by the driver. A slow tire pressure loss, which remains undetected for a longer time, can also lead to safety-relevant issues when vehicle traction or road-holding ability deteriorates, or when tire damage occurs. This is of particular concern in connection with the inner tires of rearaxle twin wheels, as these inner tires are less visible and can rub against adjacent tires, causing extensive heat and eventually producing burning of the tires.

The cable 70 shown in Figure 2 leads, for example, to a buzzer, a lamp, a diagnostic tool, or an appropriate socket or other diagnostic tool connection as discussed above. At a joint or splice 76, the cable 70 is divided into a first, inboard cable section 72, electrically interconnected with the sensor 60 of the inboard brake pad 12, and a second, outboard cable section 74, electrically interconnected with the indicator or sensor (not shown) of the outboard brake pad 18. The outboard cable section 74 is longer than the inboard cable section, and is routed so that a portion 75 of the outboard cable section 74 extends over a corresponding part of that non-rotating component located in the wheel end area disposed closest to an innermost rotating inner contour of the vehicle wheel. As illustrated in Figure 2, the stem 66 of the valve 67 defines the innermost rotating inner contour of the vehicle wheel. The portion 75 of the outboard cable section extends along the outer contour of the upstanding catch or retainer 42, which defines the part of a non-rotating component located closest to the innermost rotating inner contour of the vehicle wheel, so that the portion 75 of the outboard cable section is located directly adjacent to the valve stem 66. Contact between the valve stem 66 and the portion 75, which would only occur if an incorrectly-sized disc brake assembly is placed on the axle, will eventually cause the cable insulating sheath and the conductor disposed therein to wear through, thereby triggering the buzzer, lamp, or other device. While this manner of operation tends to make the invention most readily adaptable for use with normally-closed indicators, if the valve stem 66 or other innermost rotating inner contour of the vehicle wheel is electrically conductive, of course, the invention would certainly be adaptable for use with indicators of the normally-open type.

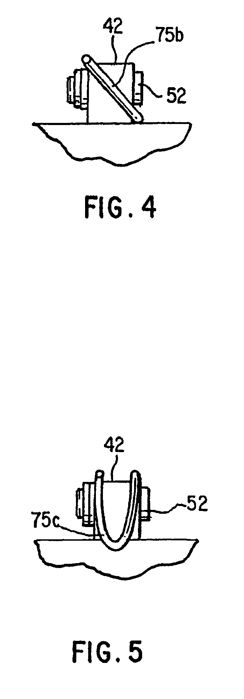

The outboard cable portion 75 is shown in Figure 2 as extending axially or at least part-axially along the outer surface of the catch or retainer 42. Many other outboard cable portion routings are available, however. Figure 3, for example, shows an alternative cable routing in which the outboard cable portion 75a extends, at least in part, circumferentially around the outer surface of the catch or retainer 42. Figures 4 and 5 show other alternative routings. The outboard cable portion 75b shown in Figure 4 extends both circumferentially and axially of the catch or retainer outer surface so as to approximately define part of a spiral, while the outboard cable portion 75c shown in Figure 5 extends both circumferentially and axially of the catch or retainer outer surface in an approximately "U" or "V" configuration.

A sensor of a different type, such as a proximity sensor, could conceivably be used in place of a cable that is worn through as described.

To summarize, in one preferred configuration, the present invention relates to a sensor placed on the caliper of a disc brake that will provide a warning signal when an incompatible wheel is used. The sensor can be integrated in an existing pad wear warning system or as a separate device, and, in one preferred embodiment, has the form of a cable or sensing wire routed along the caliper or retainer bar head. An electric circuit is opened or closed when the cable or sensing wire gets worn through due to contact with the valve stem. This contact is presumed to occur only occur when an incorrectly sized disc brake assembly is placed on the axle or when an incorrectly sized wheel rim is placed on the wheel hub.

The foregoing disclosure has been set forth merely to illustrate the invention and is not intended to be limiting. Since modifications of the disclosed embodiments incorporating the spirit and substance of the invention may occur to persons skilled in the art, the invention should be construed to include everything within the scope of the appended claims and equivalents thereof.

## Claims

1. A warning system adapted to indicate disc brake and wheel component incompatibility, comprising an element including a section disposed so that it extends between a non-rotating disc brake component and a rotating contour of said wheel component at a location of minimum clearance between the non-rotating disc brake component and the wheel component.

2. The warning system of claim 1, wherein the element is a cable.

3. The warning system according to claim 2, wherein the section is a section of the cable adapted to extend along an outboard portion of a caliper of the disc brake.

4. The warning system according to claim 1, wherein the non-rotating disc brake component is a disc brake caliper.

5. The warning system according to claim 1, wherein the section defines part of a brake pad wear indication device.

6. The warning system according to claim 1, wherein the section is adapted to lead to an outboard brake pad wear sensor.

7. The warning system according to claim 2, wherein the section defines part of a brake pad wear indication device.

8. The warning system according to claim 3, wherein the section defines part of a brake pad wear indication device.

9. The warning system according to claim 1, wherein the section is a section of the element adapted to extend along an outboard portion of a caliper of the disc brake.

10. The warning system according to claim 4, wherein the section is a section of the element adapted to extend along an outboard portion of a caliper of the disc brake.

11. A vehicle wheel end assembly comprising:
a rotating wheel component;
a disc brake; and
a warning system adapted to indicate when the disc brake and the rotating wheel component are incompatible,
wherein the warning system has an element including a section disposed so that it extends between the disc brake and a contour of said rotating wheel component at a location of minimum clearance between the disc brake and the wheel component.

12. The warning system of claim 11, wherein the element is a cable.

13. The warning system according to claim 12, wherein the section is a section of the cable extending along an outboard portion of a caliper of the disc brake.

14. The warning system according to claim 11, wherein the rotating wheel component is a portion of a tire inflation valve.

15. The warning system according to claim 11, wherein the section defines part of a brake pad wear indication device.

16. The warning system according to claim 11, wherein the section leads to an outboard brake pad wear sensor.

17. A vehicle wheel end assembly comprising:
a rotating wheel component;
a disc brake; and
warning means for indicating when the disc brake and the rotating wheel component are incompatible which includes an element having a section disposed so that it extends between the disc brake and a contour of said rotating wheel component at a location of minimum clearance between the disc brake and the wheel component.

18. The warning system of claim 17, wherein the element is a cable.

19. The warning system according to claim 18, wherein the section is a section of the cable extending along an outboard portion of a caliper of the disc brake.

20. The warning system according to claim 17, wherein the section defines part of a brake pad wear indication device.
